(19) Europäisches Patentamt

European Patent Office

Office européen des brevets

(11) **EP 1 193 228 A1**

(12) **EUROPEAN PATENT APPLICATION**
published in accordance with Art. 158(3) EPC

(43) Date of publication:
03.04.2002 Bulletin 2002/14

(51) Int Cl.⁷: **C04B 5/02**, C04B 18/14

(21) Application number: 01906149.8

(22) Date of filing: 21.02.2001

(86) International application number:
**PCT/JP01/01230**

(87) International publication number:
**WO 01/62683 (30.08.2001 Gazette 2001/35)**

(84) Designated Contracting States:
**AT BE CH CY DE DK ES FI FR GB GR IE IT LI LU
MC NL PT SE TR**

(30) Priority: 25.02.2000 JP 2000050122
30.01.2001 JP 2001021262

(71) Applicant: **Kawasaki Steel Corporation
Kobe-shi, Hyogo 651-0075 (JP)**

(72) Inventor: **TOBO, Hiroyuki,
Technical Research Laboratories
Chiba-shi, Chiba 260-0835 (JP)**

(74) Representative: **Grünecker, Kinkeldey,
Stockmair & Schwanhäusser Anwaltssozietät
Maximilianstrasse 58
80538 München (DE)**

(54) **BLAST FURNACE GRANULATED SLAG, FINE AGGREGATE PREPARED THEREFROM AND METHOD FOR PRODUCING THEM**

(57)  Novel granulated blast furnace slag, which has a mass per unit volume of at least 1.45 kg/l and a fineness modulus of at least 3.7, can be simply and effectively obtained by causing blast furnace slag of 1350 to 1400°C to flow at a quantity of flow of 2 to 5 ton/min and by ejecting water to the slag at a flow velocity of 5 to 8 m/sec and at a rate of quantity of flows by weight of water/slag of 7 to 15. Since the granulated blast furnace slag has a high grain size and a high density which cannot be obtained conventionally, it can be preferably used as fine aggregate for concrete when the grain size thereof is adjusted by crushing/grinding, or the like.

FIGURE

**Description**

Technical Field

The present invention mainly relates to coarse and hard granulated blast furnace slag and to a method of manufacturing the same. More particularly, the present invention relates to a method of adjusting the grain size of the granulated slag and reforming it to a fine aggregate having coarseness and hardness (having a high specific gravity) and to fine aggregate obtained by the method.

Background Art

Blast furnace slag is often used in such a manner that slag in a molten state is rapidly cooled with water ejected thereto and made to granulated slag. The rapid cooling treatment is called granulating treatment. At present, a method of manufacturing granulated blast furnace slag is roughly classified into an "outside-of-furnace system" in which molten slag is received once by a receiver and then granulated and an "in-front-of-furnace system" in which molten slag discharged from a blast furnace is granulated as it is.

While the thus obtained granulated slag is classified into "soft granulated slag" which is used mainly as a material of cement and the like and "hard granulated slag" which is used as fine aggregate for concrete, most of the granulated slag is the soft granulated slag used as the material of cement. Note that hard granulated slag used as fine aggregate for concrete is prescribed in JIS A5011.

When hard granulated slag is used as fine aggregate for concrete, it is not used alone in many cases. That is, the hard granulated slag is ordinarily used by being blended with natural sand and gravel. This is because that the hard granulated slag varies to a form, which is not preferable as fine aggregate, while it is stored because it has a water-hardening-property and reacts to water and solidifies. That is, hard granulated slag that contains water is not suitable for longterm storage, when it is stored alone.

In general, a grain size of fine aggregate for concrete is prescribed in detail. However, almost no natural sand recently satisfies its standard, and the grain size of the natural sand is ordinarily adjusted by blending crushed sand and the like therewith. Incidentally, when granulated slag is utilized as a replacement for crushed sand and the like, the grain size of the granulated slag must be adjusted according to the distribution of grain size of natural sand to be blended therewith. That is, when the grain size of natural sand is small, coarse granulated slag must be blended, whereas when the grain size of natural sand is large, fine granulated slag must be blended.

At this time, when, for example, hard granulated slag having a small grain size is required, hard granulated slag having a large grain size can be adjusted to hard granulated slag having a small grain size by being crushed or ground. When, however, hard granulated slag having a large grain size is required, hard granulated slag having a grain size larger than a target grain size is necessary.

Note that hard granulated blast furnace slag (which may be simply referred to as hard granulated slag in this application) is obtained by (1) the outside-of-furnace system or by (2) selecting only hard granulated slag having a high specific gravity from soft granulated slag obtained by the in-front-of-furnace system.

In granulating treatment performed by the in-front-of- furnace system, a tendency is known, as to the conditions under which soft granulated slag is created, such that when the quantity of flow of slag is small at the beginning of discharge of hot metal from a blast furnace, the grain size of resultant soft granulated slag is small and that when the quantity of flow of slag is large at the end of discharge of hot metal therefrom inversely, the grain size thereof is large. However, a technology for increasing the grain size of hard granulated slag having a high specific gravity, which is contained in the thus created soft slag and, is not yet known.

However, a method of adjusting the grain size of granulated slag is exemplified in Japanese Examined Patent Application Publication No. 6-39340. That is, the publication proposes a technology for separately producing hard granulated slag and soft granulated slag by ejecting cooling water for cooling slag from nozzles located at four positions and by independently controlling the water pressures in the respective nozzles. It is further described in the technology that when the water pressure of the cooling water that impinges against molten slag first is decreased, the grain size of granulated slag is made coarse. However, the disclosed method is a technology for adjusting coarse-graining of slag or fine-graining of slag by only adjusting a water pressure and cannot obtain granulated blast furnace slag that has a mass per unit volume and a fineness modulus which are as high as those of the present invention.

Moreover, the technology requires to appropriately control the water pressure of each ejection nozzle, which makes equipment complex. Therefore, it cannot be said that the method can increase the grain size of hard granulated slag effectively by simple equipment.

Further, the granulated blast furnace slag obtained by the technology is disadvantageous to manufacture fine aggregate, which is preferable as a material of aggregate for concrete, by crushing or grinding it because the fineness modulus of the slag is insufficient.

An object of the present invention is to provide first a method of manufacturing granulated blast furnace slag having a large grain size and high hardness which cannot be obtained by a conventional method more simply and more effectively as compared with the conventional method and to provide the granulated blast furnace slag obtained by the method. Further, the present invention also provides fine aggregate having a preferable grain size and preferable hardness by adjusting the grain size of the granulated blast furnace slag of the present invention making use of the feature of the slag that it has a large grain size and high hardness as well as provides a method of manufacturing the fine aggregate.

Disclosure of Invention

The inventors have completed the present invention by diligently conducting research as to a means for achieving the above objects.

That is, the present invention first relates to granulated blast furnace slag having a mass per unit volume of at least 1.45 kg/l and a fineness modulus of at least 3.7.

The present application also provides a method of manufacturing granulated blast furnace slag by causing blast furnace slag of 1350 to 1400°C to flow at a quantity of flow of 2 to 5 ton/min and by ejecting water to the slag at a flow velocity of 5 to 8 m/sec and at a rate of quantities of flow by weight of water/slag of 7 to 15.

In the method of manufacturing granulated blast furnace slag, it is preferable that the temperature of the ejected water be 50 to 80°C and/or that the pressure of the ejected water be 20 to 50 kPa. Further, it is preferable that the method of manufacturing any of the aforementioned granulated blast furnace slag be performed by an outside-of-furnace system. Accordingly, it is more preferable that these conditions be performed by being suitably combined.

Further, the present application also provides an invention of fine aggregate obtained by adjusting the grain size of the aforementioned granulated blast furnace slag having the mass per unit volume of at least 1.45 kg/l and the fineness modulus of at least 3.7

It is preferable that the grain size of the fine aggregate be adjusted by at least one method selected from a crushing method and a grinding method. Further, it is preferable that any of the fine aggregate has a mass per unit volume of at least 1.6 kg/l and a fineness modulus of 3.3 to 3.6.

Further, the present application also provides a method of manufacturing fine aggregate by causing blast furnace slag of 1350 to 1400°C to flow at a quantity of flow of 2 to 5 ton/min, by ejecting water to the slag at a flow velocity of 5 to 8 m/sec and at a rate of quantities of flow by weight of water/slag of 7 to 15 and by adjusting the grain size of resultant granulated blast furnace slag.

In the method of manufacturing fine aggregate, it is preferable that the temperature of the ejected water be 50 to 80°C and/or that the pressure of the ejected water be 20 to 50 kPa. Further, it is preferable that the method of manufacturing any of aforementioned fine aggregate be performed by an outside- of-furnace system. Further, in the method of manufacturing any of aforementioned fine aggregate, it is preferable that the adjustment of grain size be performed by at least one method selected from a crushing method and a grinding method. Accordingly, it is more preferable that these conditions be performed by being suitably combined.

Brief Description of the Drawings

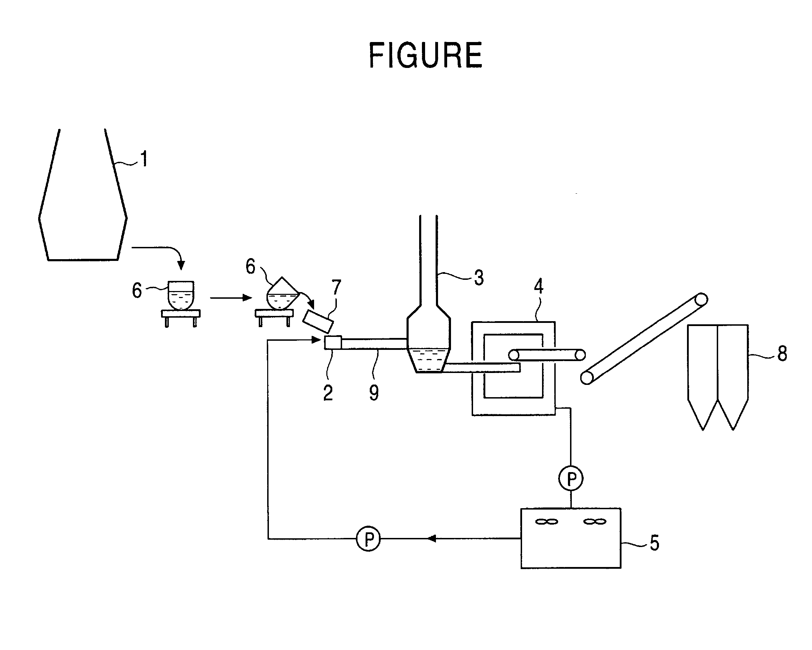

FIG. 1 is a view showing the outline of hard granulated slag manufacturing equipment employing an outside-of-furnace system.

Best Mode for Carrying Out the Invention

Granulated blast furnace slag of the present invention has a fineness modulus of at least 3.7 and a mass per unit volume of at least 1.45 kg/l.

A term "fineness modulus" used here is an ordinary index showing a grain size of aggregate and is also expressed as an FM value or a coarseness ratio in the description. The fineness modulus (FM value) is defined as follows. That is, samples each having a predetermined weight are sequentially sieved with a series of sieves of 80, 40, 20, 10, 5, 2.5, 1.2, 0.6, 0.3, and 0.15 mm; the weights of remaining grains which are summed from a more coarse opening of screen side (grains remaining in the respective sieves), that is, cumulative total weights of grains are used as representative values of the respective sieves; the percentage of the cumulative total weight of grains of each sieve to the above predetermined weight is defined as a remaining cumulative percentage; and the fineness modulus is defined as a value obtained by dividing the remaining cumulative percentage of each sieve by 100.

Conventionally, granulated blast furnace slag having an FM value of 3.7 or more is not obtained industrially. Thus, the granulated blast furnace slag of the present invention is particularly advantageous when it is utilized as fine aggregate for concrete. Note that it is preferable to set the upper limit of the FM value to 5.0 from the view point of a use. This is because that while hard granulated slag is used as fine aggregate only by itself or by being blended with natural sand after the grain size of it is adjusted, the grain size of the fine aggregate in this case is ordinarily set to 5 mm or less. Therefore, it is not necessary to set an upper limit value depending upon a use and an object.

Further, a reason why the mass per unit volume is set to 1.45 kg/l or more is that this value is preferable for a material of fine aggregate for concrete, and it is a feature of the granulated blast furnace slag of the present invention that the slag has the mass per unit volume of this value together with the fineness modulus of 3.7 or more. Note that a preferable upper limit of the mass per unit volume is 1.70 kg/l. This is because that the mass per unit volume of ordinarily used natural fine aggregate is 1.50 to 1.60 kg/l. It is not necessary to set the upper limit value depending upon a use.

Next, the present application also provides an invention of a method of manufacturing granulated blast furnace slag which has the steps of causing blast furnace slag of 1350 to 1400°C to flow at a quantity of flow of 2 to 5 ton/min, and ejecting water to the slag at a flow velocity of 5 to 8 m/sec and at a rate of quantities of flow by weight of water/slag of 7 to 15.

The method of manufacturing the granulated blast furnace slag according to the present invention will be described together with the circumstances under which the invention has been developed.

First, the inventors performed experiments by variously changing the flow velocity of ejected cooling water in conventional equipment for manufacturing soft granulated slag for cement to make the influence of granulating conditions on a grain size of granulated slag apparent. As a result, it was found that a decrease in the flow velocity of cooling water ejected from nozzles in a blowing device was very effective to increase the grain size of slag. Here, the above ejection velocity is a value calculated form the following formula.

$$\text{ejection velocity (m/sec)} =$$

$$\text{quantity of flow of cooing water (m}^3\text{/sec)/}$$

$$\text{total area of nozzle holes (m}^2\text{)}$$

Incidentally, there are conceived two methods, that is, a method of reducing an amount of water and a method of increasing the open area of nozzles to decrease the velocity of cooling water ejected from nozzles. When, however, the amount of water is reduced, a problem arises in that granulated slag is foamed and its weight is reduced by a decrease in the rate of quantities of flow of water/slag, and thus the granulated slag is made to soft granulated slag. Accordingly, the method of increasing the open area of the nozzles is advantageous as a method of decreasing the flow velocity of water without decreasing the ratio of quantity of flows of water/slag.

As described above, the decrease in the ejection velocity of cooling water very effectively functions to increase the grain size of granulated slag. On the contrary, however, a problem arises in that the weight of granulated slag decreases similarly to the case in which the rate of quantities of flow of water/slag is decreased. Actually, when the flow velocity was set to 10 m/sec or less in the soft granulated slag manufacturing equipment, granulated slag, which was manufactured at the end of discharge of hot metal from a blast furnace at which the slag had a high temperature and a large quantity of flow, was made excessively light in weight and might partially float on water.

In the method of the present application, it has been concluded that the flow velocity of water is preferably set to 5 to 8 m/sec from the result of the aforementioned examination and other conditional factors which will be described below.

Next, when the inventors examined a method of obtaining hard granulated slag having a high specific gravity, it has been found that a decrease in a slag temperature is most effective. That is, when a slag temperature is 1400°C or less, the mass per unit volume of original slag is liable to be made to 1.45 kg/l or more. As a method of reducing a slag temperature, it is preferable to take a time lag, that is, to employ the "outside- of-furnace system" that granulates molten slag from a blast furnace after it is received once by a receiver. That is, at present, the outside-of-furnace system, which receives molten slag once by a slag ladle, then transports the molten slag to granulating equipment installed at a place other than the blast furnace, and granulates it, has the largest field-proven performance and is most effective. It is needless to say that any other methods may be employed to reduce the slag temperature. That is, it has been found that when the temperature of the molten slag from the blast furnace is 1400°C or less, the formation of pores by the gas generated in the slag is suppressed and the mass per unit volume does not decrease. However, when the slag temperature is reduced excessively, the slag loses fluidity and is disadvantageous in industrial production. Thus, a lower limit temperature is set to 1350°C.

It should be noted that the slag temperature referred to in the present application is the temperature of a molten slag flow just before it is granulated. For example, the temperature of a molten slag flow falling downward from a slag ladle is measured with a radiation thermometer.

Next, a quantity of flow of molten slag flowing to a granulation nozzle section was also examined. There is a tendency that the grain size of granulated slag is increased as the quantity of flow of slag increases. When it is assumed that the quantity of flow of slag is 5 ton/min or less, slag and water do not overflow from a granulation trough or do not clog therein. On the contrary, when the quantity of flow of slag is 2 ton/min or more, a less amount of slag is solidified at a step before a granulation step, for example, in a slag trough because a slag temperature less decreases. Thus, a case can be avoided in which the smooth flow of molten slag in the trough is prevented by solidified slag and cannot be granulated. Therefore, it has been found that the quantity of flow blast furnace slag, that is, the quantity of flow of molten slag, which is caused to flow to the granulating nozzle section, is preferably 2 to 5 ton/min.

Next, a preferable ratio of quantity of flows of water and slag was examined. A smaller ratio of quantity of flows by weight of water and slag requires a smaller amount of energy necessary to granulating a slag flow and the grain size of granulated slag is reduced. However, when the ratio of quantity of flows by weight of water/slag is 7 or more, a sufficient amount of force for forcibly flowing granulated slag can be obtained, by which the clogging of slag in the granulation trough can be prevented. In contrast, when the ratio of quantity of flows by weight of water/slag is 15 or less, an amount of water is not excessively large. Thus, large piping and pumps having a large capacity are not necessary and equipment is less expensive. Accordingly, it has been found that the rate of quantities of flow by weight of water/slag is preferably about 7 to 15.

As a result of comprehensive examination of the respective conditional factors and the optimization thereof, the method of manufacturing granulated blast furnace slag, which is the invention of the present application and which sets the fineness modulus of the slag to at least 3.7 and the mass per unit volume thereof to at least 1.45 kg/l, has been found.

That is, the present application also provides the method of manufacturing granulated blast furnace slag, the method having the steps of causing blast furnace slag of 1350 to 1400°C to flow at the quantity of flow of 2 to 5 ton/min; and ejecting water to the slag at the flow velocity of 5 to 8 m/sec and at the rate of quantities of flow by weight of water/slag of 7 to 15.

Note that when the temperature of cooling water ejected from granulation nozzles was examined, it has been found that the temperature is preferably 50 to 80°C. There is slightly a tendency that a higher temperature of cooling water results in a decrease in a specific gravity while the grain size of granulated slag increases. As a result of examination of the relationship between conditions of granulation and a crack, it has been found that a crack is liable to occur when the temperature of cooling water is low. The occurrence of a crack greatly decreases a grain size in a transportation process and reduces an FM value. According to the knowledge of the inventors, it is preferable that the temperature of cooling water be set to 50 to 80°C. While it is a matter of course, when cooling water comes into contact with molten slag, it simultaneously boils and evaporates and performs a cooling action. Therefore, while boiling water may be used when the difference between a slag temperature and a cooling water temperature is taken into consideration, it is preferable to use water the temperature of which is 50 to 80°C just in front of the ejection ports of the nozzles. That is, the temperature of cooling water referred to in the present application is the temperature of the water in the piping in front of the ejection nozzles of the cooling water for granulation or the temperature of the water in the vessel of the cooling water. These temperatures can be measured by disposing a thermocouple in, for example, the piping of the ejection nozzles or the vessel of the cooling water.

Note that the present application also examined the pressure of cooling water. The pressure of cooling water is changed by a quantity of flow of water, an area of nozzle holes, a shape of piping, and the like. In the present application, a pressure gauge was disposed in piping in front of the nozzles and the influence of pressure was also examined by variously changing these conditions. As a result, it has been found that it is preferable in the present invention to adjust the ejection pressure of cooling water to 20 to 50 kPa when the cooling water is ejected from the granulation nozzles. The pressure is more preferably 20 to 30 kPa. This is because that when the pressure of cooling water is 50 kPa or less, a grain size tends to greatly increase and that the pressure of 20 kPa or more reduces the occurrence of a foaming phenomenon in the granulation trough.

Further, the present application also provides an invention of fine aggregate that is obtained by adjusting the grain size of the aforementioned granulated blast furnace slag the mass per unit volume of which is at least 1.45 kg/l and the fineness modulus of which is at least 3.7.

Note that it is preferable that the grain size of the fine aggregate be adjusted by at least one method selected from a crushing method and a grinding method.

That is, when the aforementioned granulated blast furnace slag (untreated original slag) of the present application is used as it is as fine aggregate for concrete and the like, there is a possibility that the fluidity of fresh concrete decreases and that the strength of concrete decreases because pointed portions exist in the slag. Thus, when the granulated blast furnace slag of the present application is used as fine aggregate, it is preferable to previously remove the pointed portions and portions without strength by grain size adjusting treatment. It is preferable to use a crusher or a grinder and further to use both of them for the grain size adjustment method.

At this time, since the grain size of the granulated blast furnace slag is reduced by the grain size adjusting treatment, when the slag is used as a material of fine aggregate, the grain size of the slag must be previously increased. Moreover, since portions with smaller strength are removed by the grain size adjusting treatment, the more frequently the grain size adjusting treatment is performed, the more the strength of grains will be improved. That is, the larger the grain size of the granulated blast furnace slag is, the more strong the strength of grains are made. From this point of view, the granulated blast furnace slag of the present application, which has a large grain size and large hardness with the fineness modulus of at least 3.7 and the mass per unit volume of at least 1.45 kg/l, is preferable as a material of fine aggregate.

Accordingly, the present application also provides an invention of fine aggregate which is obtained as described above, the mass per unit volume of which is at least 1.6 kg/l, and the fineness modulus of which is 3.3 to 3.6.

Further, the present application also relates to a method of manufacturing the aforementioned fine aggregate. Moreover, the manufacturing method is a method of adjusting the grain size of the granulated blast furnace slag of the present invention. Therefore, the contents described above of the granulated blast furnace slag manufacturing method and of the preferable mode thereof can be applied as they are to the fine aggregate manufacturing method. For confirmation, the fine aggregate manufacturing method of the present invention will be described below.

That is, the fine aggregate manufacturing method also has the steps of causing blast furnace slag of 1350 to 1400°C to flow at a quantity of flow of 2 to 5 ton/min; ejecting water to the slag at a flow velocity of 5 to 8 m/sec and at the rate of quantities of flow by weight of water/slag of 7 to 15; and adjusting the grain size of resultant granulated blast furnace slag.

Note that, in the fine aggregate manufacturing method, it is preferable that the temperature of the ejected water be 50 to 80°C and/or that the pressure of the ejected water is 20 to 50 kPa. Further, it is preferable that any of the aforementioned fine aggregate manufacturing methods be performed by the outside-of-furnace system. Further, it is preferable in any of the aforementioned fine aggregate manufacturing methods that the grain size adjustment be performed by at least one method selected from the crushing method and the grinding method. Therefore, it is preferable that these conditions be performed by being suitably combined.

[Embodiment]

An embodiment of the present invention will be described below.

FIG. 1 shows the outline of granulated slag manufacturing equipment employing the outside-of-furnace system.

The granulated slag manufacturing equipment is composed of a blowing device 2, a granulation trough 9, a granulation vessel 3, and a dehydrator 4 each of which is installed in the vicinity of a blast furnace 1. Note that cooling water to be supplied to the blowing device 2 is supplied from a cooling tower 5, in which the water collected by the dehydrator is stored, through a pump.

Molten slag from the blast furnace 1 is received once by a slag ladle 6 and is caused to flow down from the slag ladle 6 to the blowing device 2 through a slag trough 7. At this time, the molten slag is granulated by ejecting cooling water from granulating nozzles to the molten slag that flows downward. The thus obtained granulated slag is sent from the granulation vessel 3 to the dehydrator 4. Then, the granulated slag is stored in a product storage vessel 8 after it is separated into a solid and a liquid.

Next, a method of manufacturing hard granulated slag employed in an experiment performed using the granulated slag manufacturing apparatus will be exemplified to specifically explain the present invention. After molten slag was received by the slag ladle 6 below the blast furnace 1, the slag ladle 6 was carried to the granulated slag manufacturing apparatus. Next, solidified slag formed on the slag surface in the slag ladle 6 was broken before the slag was caused to flow, and the slag ladle 6 was carried to an inclining position. Then, the slag was discharged by inclining the ladle so that the amount of the flowing-down slag was made constant and was caused to flow into the blowing device 2 while stabilizing the flow of the slag through the slag trough 7. At that time, the slag was granulated with cooling water ejected from granulating nozzles installed to the blowing device 2. Note that the temperature of the cooling water was measured at a position just in front of the ejection ports of the nozzles. Note that the temperature of the slag was measured by measuring the temperature of a slag flow, which was caused to flow down from the slag ladle 6 and dropped, with a radiation thermometer.

On the other hand, the ejection velocity of the cooling water was controlled by adjusting a valve in cooling water piping and the area of the open holes of a nozzle plate through which nozzle ejection holes were formed. Specifically, a plurality of nozzle plates each having a different number of open holes were prepared, further some of the open holes of each plate were machined so that plugs could be screwed thereinto, the open area was adjusted by mounting/dismounting plugs, and a quantity of flow was adjusted so that it could be kept constant.

In the experiment, the amount of slag discharged from the slag ladle at a time was set to about 30 ton. Table 1 shows granulating conditions for each of examples and comparative examples, that is, an average quantity of flow (ton/min) of molten slag discharged from the ladle, a rate of quantities of flow by weight of water/slag, a temperature (°C) of cooling water, an ejection velocity (m/sec) of water from the nozzles.

The granulated blast furnace slag, which was manufactured by changing the granulating conditions, was extracted from the storage vessel in an amount of 30 tons each time, was transported to a yard, and was deposited as one mountain each time. Next, samples were taken from each mountain and the FM value and the mass per unit volume (kg/l) of each sample was measured. Table 1 also shows a result of measurement.

As can be found from the result shown in the table, in the case of the examples Nos. 1 to 19 which are suited to the granulating conditions of the present invention, coarse and hard granulated slag having FM value ≥ 3.7 and mass per unit volume ≥ 1.45 kg/l can be manufactured. Note that the comparative examples Nos. 20 to 34 show a case in which the ejection velocity is higher than 8 m/sec, the comparative examples Nos. 35 to 46 show a case in which the rate of quantities of flow by weight of water/slag is larger than 15, and the comparative examples Nos. 42 to 46 show a case in which the quantity of flow of slag is less than 2.0 ton/min. Since any of the comparative examples does not satisfy one or a plurality of the conditions of the present invention, the FM value of it is less than 3.7. Further, in the above experiment, Nos. 1 to 21 and Nos. 35 to 46 were made within the range of pressure of cooling water set to 20 to 55 kPa, and Nos. 22 to 35 were made within the range of pressure of cooling water set to 56 to 110 kPa. In particular, Nos. 1 to 8, 10, 11, 13 and 15 of the examples were obtained as result of operation performed within the range of pressure of 20 to 50 kPa, and they could obtain a large values as to both an FM value and a mass per unit volume.

It should be noted that there was caused cases in which granulated slag could not be manufactured due to a phenomenon of clogging in the slag trough which was caused by an excessively small quantity of flow of slag and due to a phenomenon of overflow in the granulation trough which was caused by an excessively large quantity of flow of slag and by an excessive small quantity of flow of water. These cases are not shown in Table 1 because the quality of slag in them cannot be evaluated. Further, there was a tendency that the smaller the flow velocity of cooling water, the more coarse a grain size was made. When the flow velocity was less than 5 m/sec, molten slag could not be granulated and made to a foamed crystalline block.

Next, a method of adjusting the grain size of the aforementioned coarse and hard granulated blast furnace slag and examples of fine aggregate obtained by the method will be described.

[Adjustment of grain size by crusher]

Granulated blast furnace slag having an FM value of 4.0 and a mass per unit volume of 1.52 kg/l was supplied to an impeller breaker (crusher for crushing grains with impact) at a velocity of 10 ton/h and treated. Resultant fine aggregate had an FM value of 3.42 and a mass per unit volume of 1.68 kg/l.

[Adjustment of grain size by grinder]

Granulated blast furnace slag having an FM value of 3.80 and a mass per unit volume of 1.60 kg/l was supplied to a rotary claimer (grinder for grinding the surfaces of grains by the friction therebetween made by Nippon Chuzo Kabushiki Kaisha) at a velocity of 10 ton/h and treated. Resultant fine aggregate had an FM value of 3.55 and a mass per unit volume of 1.67 kg/l.

Conventionally, when the grain size of granulated slag is adjusted by crushing and the like, the grain size decreases, and it is difficult to make fine aggregate having an FM value of 3.0 or more. Thus, when it is intended to obtain fine aggregate having an FM value of, for example, 3.3 or more, there is conventionally no method except a method of remaining a coarse grain portion by classifying a fine grain portion which is made after the adjustment of a gain size, while such a method is not ordinarily performed. However, when the fine grain portion is removed by the classification, a problem arises in that a yield decreases.

In the method of manufacturing the fine aggregate of the present application, a classification process is not necessary in any of the grain size adjustment methods of crushing and grinding because the blast furnace slag used as a material is coarse and has high strength. Moreover, coarse and very strong fine aggregate, which has an FM value of 3.3 to 3.6 and a mass per unit volume of at least 1.6 kg/l can be obtained with an almost 100% yield.

Note that resultant fine aggregate was blended with concrete as the fine aggregate thereof in an amount of 30%, and they were kneaded and molded. When the compression strength of a molded body was measured after it was cured for 28 days, a compression strength as high as that of a case in which natural aggregate in an amount of 100% was used could be obtained.

As described above, it can be found that the granulated blast furnace slag manufactured by the method of the present invention is advantageous as fine aggregate for concrete. This is because that even if the grain size of the granulated blast furnace slag is decreased by that the slag is subjected to grain size adjustment as post treatment, the grain size of a product can be increased after the completion of the grain size adjustment due to the large grain size of the slag before the grain size adjustment.

Table 1

| | No. | Flow rate of slag (dry) t/min | Water/ Slag | Temperature of slag °C | Temperature of cooling water | Ejection flow velocity m/s | FM value | Mass of unit volume kg/l |
|---|---|---|---|---|---|---|---|---|
| Example | 1 | 4.0 | 8.0 | 1379 | 80 | 5.0 | 4.59 | 1.64 |
| | 2 | 3.4 | 10.9 | 1379 | 65 | 5.0 | 4.26 | 1.62 |
| | 3 | 3.3 | 11.5 | 1398 | 62 | 5.3 | 4.35 | 1.54 |
| | 4 | 3.4 | 11.8 | 1377 | 70 | 5.3 | 4.34 | 1.65 |
| | 5 | 3.9 | 7.0 | 1374 | 66 | 5.7 | 4.33 | 1.68 |
| | 6 | 3.9 | 10.3 | 1364 | 60 | 5.7 | 4.26 | 1.64 |
| | 7 | 3.5 | 11.4 | 1399 | 68 | 6.0 | 4.15 | 1.52 |
| | 8 | 4.0 | 14.4 | 1394 | 50 | 6.3 | 3.99 | 1.58 |
| | 9 | 2.3 | 14.8 | 1393 | 66 | 6.7 | 3.86 | 1.62 |
| | 10 | 2.6 | 13.5 | 1389 | 75 | 6.7 | 4.19 | 1.54 |
| | 11 | 3.3 | 13.0 | 1396 | 59 | 7.0 | 3.99 | 1.58 |
| | 12 | 2.5 | 14.4 | 1398 | 59 | 7.0 | 3.84 | 1.58 |
| | 13 | 2 | 15.0 | 1395 | 68 | 7.3 | 4.12 | 1.6 |
| | 14 | 2.3 | 14.3 | 1399 | 55 | 7.7 | 3.82 | 1.58 |
| | 15 | 5 | 7.0 | 1385 | 69 | 7.7 | 4.2 | 1.57 |
| | 16 | 3.5 | 13.1 | 1395 | 69 | 8.0 | 3.84 | 1.52 |
| | 17 | 4.2 | 8.0 | 1375 | 45 | 5.3 | 3.73 | 1.68 |
| | 18 | 4 | 7.5 | 1370 | 48 | 5.7 | 3.72 | 1.65 |
| | 19 | 2.5 | 15.0 | 1365 | 83 | 8.0 | 3.98 | 1.46 |

Table 1   (continued)

|  | No. | Flow rate of slag (dry) t/min | Water/ Slag | Temperature of slag °C | Temperature of cooling water | Ejection flow velocity m/s | FM value | Mass of unit volume kg/l |
|---|---|---|---|---|---|---|---|---|
| Comparative Example | 20 | 1.6 | 14.4 | 1399 | 63 | 8.5 | 3.52 | 1.59 |
| | 21 | 2.5 | 9.6 | 1398 | 68 | 8.5 | 3.69 | 1.58 |
| | 22 | 3.5 | 11.1 | 1382 | 57 | 9.0 | 3.62 | 1.65 |
| | 23 | 3.3 | 11.0 | 1405 | 85 | 9.0 | 3.68 | 1.35 |
| | 24 | 3.5 | 12.0 | 1378 | 62 | 9.5 | 3.52 | 1.63 |
| | 25 | 1.8 | 23.9 | 1395 | 62 | 10.0 | 3.36 | 1.54 |
| | 26 | 1.8 | 23.9 | 1397 | 50 | 10.0 | 3.18 | 1.54 |
| | 27 | 4.0 | 10.0 | 1382 | 40 | 10.0 | 3.3 | 1.71 |
| | 28 | 2.9 | 14.1 | 1378 | 53 | 10.5 | 3.36 | 1.59 |
| | 29 | 1.5 | 28.0 | 1360 | 50 | 10.5 | 3.4 | 1.62 |
| | 30 | 2.5 | 18.4 | 1391 | 48 | 11.0 | 3.2 | 1.58 |
| | 31 | 2.6 | 14.2 | 1360 | 41 | 11.0 | 3.35 | 1.62 |
| | 32 | 3.0 | 14.3 | 1356 | 45 | 11.5 | 3.5 | 1.6 |
| | 33 | 3.3 | 13.0 | 1340 | 42 | 11.5 | 3.44 | 1.59 |
| | 34 | 3.5 | 12.6 | 1396 | 53 | 12.0 | 3.4 | 1.538 |
| | 35 | 2.2 | 20.5 | 1390 | 54 | 7.0 | 3.42 | 1.63 |
| | 36 | 2.7 | 16.3 | 1388 | 57 | 6.7 | 3.68 | 1.6 |
| | 37 | 3.0 | 15.3 | 1398 | 72 | 7.0 | 3.44 | 1.54 |
| | 38 | 2.5 | 17.6 | 1396 | 57 | 7.7 | 3.38 | 1.51 |
| | 39 | 2.8 | 17.1 | 1398 | 68 | 7.7 | 3.67 | 1.46 |
| | 40 | 2.2 | 18.0 | 1375 | 38 | 6.3 | 3.45 | 1.68 |
| | 41 | 2.0 | 22.5 | 1387 | 71 | 8.5 | 3.56 | 1.42 |
| | 42 | 1.8 | 20.0 | 1398 | 87 | 6.7 | 3.62 | 1.44 |
| | 43 | 1.5 | 26.0 | 1387 | 68 | 7.3 | 3.38 | 1.63 |
| | 44 | 1.7 | 25.3 | 1386 | 59 | 9.0 | 3.3 | 1.65 |
| | 45 | 1.6 | 24.4 | 1388 | 66 | 6.7 | 3.5 | 1.62 |
| | 46 | 1.8 | 21.1 | 1388 | 72 | 6.3 | 3.55 | 1.61 |

Industrial Applicability

As described above, according to the present invention, coarse and hard granulated blast furnace slag having an FM value of at least 3.7 and a mass per unit volume of at least 1.45 kg/l, which cannot be conventionally obtained, can be simply and effectively obtained by properly controlling the temperature and the quantity of flow of the blast furnace slag, the flow velocity of cooling water and the rate of quantities of flow of water/slag. Therefore, the blast furnace slag can be preferably used as a material of fine aggregate for concrete, and the like.

**Claims**

**1.**   Granulated blast furnace slag having a mass per unit volume of at least 1.45 kg/l and a fineness modulus of at least 3.7.

2. A method of manufacturing granulated blast furnace slag, comprising the steps of:

causing blast furnace slag of 1350 to 1400°C to flow at a quantity of flow of 2 to 5 ton/min: and
ejecting water to the slag at a flow velocity of 5 to 8 m/sec and at a rate of quantities of flow by weight of water/slag of 7 to 15.

3. A method of manufacturing granulated blast furnace slag according to claim 2, wherein the temperature of the ejected water is 50 to 80°C.

4. A method of manufacturing granulated blast furnace slag according to claim 2 or 3, wherein the pressure of the ejected water is 20 to 50 kPa.

5. A method of manufacturing granulated blast furnace slag according to claim 4, wherein the method is performed by an outside-of-furnace system.

6. Fine aggregate, comprising the granulated blast furnace slag according to claim 1 the grain size of which is adjusted.

7. Fine aggregate according to claim 6, wherein the grain size is adjusted by at least one method selected from a crushing method and a grinding method.

8. Fine aggregate according to claim 6 or 7, wherein a mass per unit volume is at least 1.6 kg/l and a fineness modulus is 3.3 to 3.6.

9. A method of manufacturing fine aggregate, comprising the steps of:

causing blast furnace slag of 1350 to 1400°C to flow at a quantity of flow of 2 to 5 ton/min:

ejecting water to the slag at a flow velocity of 5 to 8 m/sec and at a rate of quantities of flow by weight of water/slag of 7 to 15; and
adjusting the grain size of resultant granulated blast furnace slag.

10. A method of manufacturing fine aggregate according to claim 9, wherein the temperature of the ejected water is 50 to 80°C.

11. A method of manufacturing fine aggregate according to claim 9, wherein the pressure of the ejected water is 20 to 50 kPa.

12. A method of manufacturing fine aggregate according to any of claims 9 to 11, wherein the method is performed by an outside-of-furnace system.

13. A method of manufacturing fine aggregate according to claim 12, wherein the adjustment of grain size is performed by at least one method selected from a crushing method and a grinding method.

FIGURE

## INTERNATIONAL SEARCH REPORT

| | International application No. |
|---|---|
| | PCT/JP01/01230 |

A. CLASSIFICATION OF SUBJECT MATTER
    Int.Cl$^7$   C04B5/02, C04B18/14

According to International Patent Classification (IPC) or to both national classification and IPC

B. FIELDS SEARCHED

Minimum documentation searched (classification system followed by classification symbols)
    Int.Cl$^7$   C04B5/00-5/06, C04B18/00-18/30

Documentation searched other than minimum documentation to the extent that such documents are included in the fields searched
    Jitsuyo Shinan Koho          1926-1996    Toroku Jitsuyo Shinan Koho  1994-2001
    Kokai Jitsuyo Shinan Koho    1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,A | JP, 2001-072448, A (Kawasaki Steel Corporation), 21 March, 2001 (21.03.01), Claims   (Family: none) | 1-13 |
| A | JP, 11-236255, A (Kawasaki Steel Corporation), 31 August, 1999 (31.08.99), Claims   (Family: none) | 1-13 |
| A | JP, 62-113738, A (Kobe Steel, Ltd.), 25 May, 1987 (25.05.87), Claims   (Family: none) | 1-13 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 May, 2001 (14.05.01) | 22 May, 2001 (22.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)